# FASCICULE DE BREVET EUROPEEN

(11) **EP 3 956 554 B1**
(45) Date de publication et mention de la délivrance du brevet: **18.10.2023**
(21) Numéro de dépôt: 20715931.0
(22) Date de dépôt: 08.04.2020
(51) Int. Cl.: F02C 7/042, F02K 1/66

(54) **PROCÉDÉ D'UTILISATION D'UNE ENTRÉE D'AIR DE NACELLE DE TURBORÉACTEUR LORS D'UNE PHASE DE POUSSÉE ET LORS D'UNE PHASE D'INVERSION DE POUSSÉE**
VERFAHREN ZUR VERWENDUNG EINES LUFTEINLASSES EINER TURBOSTRAHLTRIEBWERKSGONDEL WÄHREND EINER SCHUBPHASE UND EINER SCHUBUMKEHRPHASE
METHOD FOR USING AN AIR INTAKE OF A TURBOJET ENGINE NACELLE DURING A THRUST PHASE AND A REVERSE THRUST PHASE

(30) Priorité: 17.04.2019 FR 1904096
(43) Date de publication de la demande: 23.02.2022
(73) Titulaire: SAFRAN AIRCRAFT ENGINES, 75015 Paris (FR)
(72) Inventeur: MINCU, Daniel-Ciprian, 77550 MOISSY-CRAMAYEL (FR); BAUDOIN, Laurent, Louis, Robert, 77550 MOISSY-CRAMAYEL (FR); SIRVIN, Nicolas, Joseph, 77550 MOISSY-CRAMAYEL (FR); WOROTYNSKA, Jagoda, Alina, 77550 MOISSY-CRAMAYEL (FR); DAUTREPPE, Frédéric, 77550 MOISSY-CRAMAYEL (FR); FRANTZ, Caroline, Marie, 77550 MOISSY-CRAMAYEL (FR)
(74) Mandataire: Argyma
(86) Numéro de dépôt international: PCT/EP2020/060060
(87) Numéro de publication internationale: WO 2020/212232

(56) Documents cités:
- DE-A1- 4 134 051
- GB-A- 1 565 212
- US-A1- 2013 170 950

## Description

### DOMAINE TECHNIQUE DE L'INVENTION

La présente invention concerne le domaine des turboréacteurs d'aéronef et vise plus particulièrement une entrée d'air d'une nacelle d'un turboréacteur d'aéronef.

De manière connue, un aéronef comporte un ou plusieurs turboréacteurs pour permettre sa propulsion par accélération d'un flux d'air qui circule d'amont en aval dans le turboréacteur.

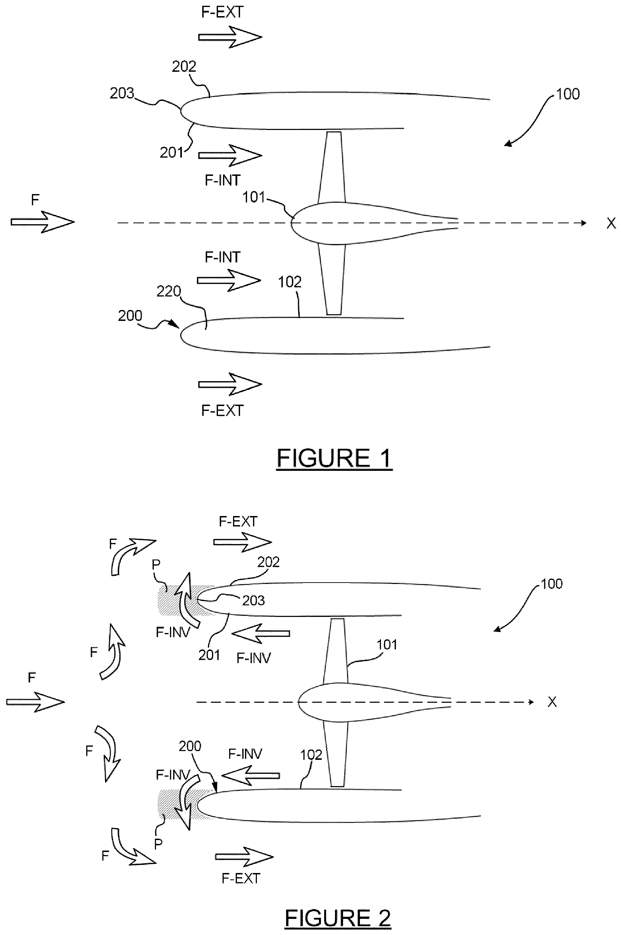

En référence à la figure 1, il est représenté un turboréacteur 100 s'étendant selon un axe X et comportant une soufflante 101 montée rotative autour de l'axe X dans une virole extérieure 102 afin d'accélérer, lors d'une phase de poussée du turboréacteur 100, un flux d'air circulant d'amont vers l'aval dans le turboréacteur 100, dit flux d'air intérieur F-INT. Par la suite, les termes « amont » et « aval » sont définis par rapport à la circulation du flux d'air intérieur F-INT.

De manière connue, le turboréacteur 100 comprend une nacelle comportant à son extrémité amont une entrée d'air 200 comportant une paroi intérieure 201 tournée vers l'axe X et une paroi extérieure 202 opposée à la paroi intérieure 201. Les parois 201, 202 sont reliées par une lèvre d'entrée d'air 203 qui comporte un bord d'attaque de manière à former une cavité annulaire 220. L'entrée d'air 200 possède un profil aérodynamique qui permet de séparer un flux d'air amont F en le flux d'air intérieur F-INT guidé par la paroi intérieure 201 et un flux d'air extérieur F-EXT guidé par la paroi extérieure 202. Par la suite, les termes « intérieur » et « extérieur » sont définis radialement par rapport à l'axe X du turboréacteur 100.

Pour réduire la distance de freinage d'un aéronef, notamment lors de l'atterrissage, il est connu d'intégrer dans une nacelle un système d'inversion de poussée qui permet de modifier l'orientation du flux d'air à l'échappement de manière à réaliser une inversion de poussée. De manière connue, une phase d'inversion de poussée est réalisée par une ouverture de trappes/grilles dans la veine secondaire, en aval des raidisseurs, afin de conduire les flux d'air vers l'extérieur de manière radiale.

Pour un turboréacteur à fort taux de dilution, la nacelle possède un diamètre important et il n'est pas souhaité d'intégrer un système d'inversion de poussée classique étant donné que cela pénaliserait de manière importante la masse, l'encombrement et la trainée du turboréacteur.

Pour permettre une inversion de poussée, une autre solution consiste à prévoir une soufflante à pas variable, connue sous son abréviation anglaise « Variable Pitch Fan » ou VPF de manière à permettre d'inverser le flux d'air circulant dans la veine secondaire d'un turboréacteur en modifiant le calage des aubes de la soufflante et ainsi créer une poussée inverse permettant la décélération de l'aéronef lors de l'atterrissage.

En référence à la figure 2, lors d'une phase d'inversion de poussée, un flux d'air inverse F-INV circule d'aval en amont dans le turboréacteur 100, c'est-à-dire, inversement au flux d'air intérieur F-INT de la figure 1. Plus précisément, le flux d'air inverse F-INV circule au voisinage de la virole extérieure 102. Le flux d'air inverse F-INV est guidé vers l'amont par la paroi intérieure 201 dans une direction sensiblement axiale par rapport à l'axe X. Ce flux d'air inverse F-INV s'oppose alors au flux d'air amont F, ce qui permet l'inversion de poussée.

En pratique, comme illustré à la figure 2, une partie du flux d'air inverse F-INV contourne le profil aérodynamique de l'entrée d'air 200 selon une direction sensiblement radiale, ce qui entraine l'apparition d'une zone de dépression locale P au voisinage de la lèvre d'entrée d'air 203. Une telle dépression locale P génère une aspiration vers l'amont, c'est-à-dire, une force qui s'oppose à la poussée inverse. Dans les faits, ce phénomène réduit les performances de la phase d'inversion de poussée de manière très importante.

L'invention vise ainsi à réduire ce phénomène afin d'augmenter les performances du turboréacteur lors d'une phase d'inversion de poussée sans affecter les performances dudit aéronef lors d'une phase de poussée, c'est-à-dire, lorsque le flux n'est pas inversé.

On connaît dans l'art antérieur par la demande de brevet US2013/0170950 une entrée d'air déformable lors du décollage ne favorisant pas une phase d'inversion de poussée.

Dans le domaine éloigné des aéroglisseurs, on connaît également par la demande de brevet GB1565212A une hélice montée dans un carénage dont la forme de l'extrémité amont est déformable, grâce à un organe gonflable. Un ressort permet de maintenir l'organe gonflable en position rétractée. L'organe gonflable est par ailleurs alimenté par une conduite d'air pressurisée pour le gonfler.

### PRESENTATION DE L'INVENTION

L'invention concerne un procédé d'utilisation d'une entrée d'air d'une nacelle de turboréacteur d'aéronef s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, l'entrée d'air s'étendant de manière circonférentielle autour de l'axe X et comprenant une paroi intérieure tournée vers l'axe X et configurée pour guider le flux d'air intérieur et le flux d'air inverse et une paroi extérieure, opposée à la paroi intérieure et configurée pour guider un flux d'air extérieur, la paroi intérieure et la paroi extérieure étant reliées entre elles par une lèvre d'entrée d'air de manière à former une cavité annulaire, la lèvre d'entrée d'air comportant au moins une portion élastiquement déformable, l'entrée d'air comportant au moins un organe de liaison, monté dans la cavité annulaire solidairement à la portion élastiquement déformable et au moins un organe de déplacement commandable relié mécaniquement à l'organe de liaison et configuré pour déplacer l'organe de liaison, procédé dans lequel
- lors d'une phase de poussée du turboréacteur, l'organe de déplacement commandable déplace l'organe de liaison dans une première position, dans laquelle la portion élastiquement déformable de la lèvre d'entrée d'air comprend un profil aérodynamique de manière à guider le flux d'air intérieur sur la paroi intérieure pour favoriser une phase de poussée, et
- lors d'une phase d'inversion de poussée du turboréacteur, l'organe de déplacement commandable déplace l'organe de liaison dans une deuxième position, dans laquelle la portion élastiquement déformable de la lèvre d'entrée d'air comprend un profil irrégulier afin de permettre un décollement du flux d'air inverse de la portion élastiquement déformable.

Grâce à l'invention, la lèvre d'entrée d'air est déformée de manière élastique pour permettre de ne pas réduire les performances de la phase d'inversion de poussée. Une telle déformation est avantageuse sur le plan aérodynamique et permet d'éviter de recourir à un système d'inversion de poussée lourd et encombrant selon l'art antérieur.

Autrement dit, l'organe de déplacement commandable est relié à l'organe de liaison. L'organe de liaison est relié à la portion élastiquement déformable de la lèvre. Ainsi, lorsque l'organe de liaison se déplace, la portion élastiquement déformable se déplace avec ce dernier. Selon l'invention, l'organe de déplacement applique un effort mécanique par pression ou traction sur la portion élastiquement déformable. De préférence, l'organe de déplacement et la portion élastiquement déformable sont solidaires dans chaque phase.

De préférence, la portion élastiquement déformable possède une rigidité lui interdisant d'être gonflée.

Selon un aspect de l'invention, la lèvre d'entrée d'air comprend une pluralité de portions élastiquement déformables réparties à la circonférence de l'entrée d'air autour de l'axe X afin de réduire la traînée.

Selon un aspect de l'invention, la lèvre d'entrée d'air comprend une unique portion élastiquement déformable s'étendant de manière circonférentielle autour de l'axe X assurant un décollement du flux d'air inverse homogène sur l'ensemble de la circonférence de la lèvre d'entrée d'air.

Selon un aspect de l'invention, l'organe de liaison est positionné en aval de l'extrémité amont de la lèvre d'entrée d'air de manière à déformer la paroi intérieure ou la paroi extérieure.

De manière préférée, l'organe de liaison est radialement intérieur à l'extrémité amont de la lèvre d'entrée d'air afin de perturber le flux d'air inverse circulant sur la paroi intérieure.

Selon un aspect de l'invention, la lèvre d'entrée d'air comporte une enveloppe fixe et la portion élastiquement déformable est reliée à l'enveloppe fixe.

Selon un aspect de l'invention, de manière préférée, l'organe de liaison est solidarisé sensiblement au centre de la portion élastiquement déformable. Ainsi, cela permet d'obtenir une déformation d'amplitude maximale. Dans cet exemple, la portion élastiquement déformable comportant une longueur définie dans un plan en coupe longitudinale, l'organe de liaison mobile est écarté du centre de la portion élastiquement déformable d'une distance inférieure à 30% de la longueur totale de la portion élastiquement déformable.

Selon un aspect de l'invention, l'organe de déplacement commandable est configuré pour déplacer l'organe de liaison vers l'intérieur de la cavité annulaire afin de former une portion concave dans la lèvre d'entrée d'air dans la deuxième position. Une telle lèvre d'entrée d'air irrégulière permet de favoriser un décollement optimal du flux d'air. De préférence, la concavité est tournée vers l'amont de manière à éviter toute dépression locale au niveau de la lèvre d'entrée d'air. De préférence, la concavité est tournée radialement vers l'intérieur de manière à favoriser un décollement du flux d'air inverse circulant sur la paroi intérieure.

Selon un aspect de l'invention, l'organe de déplacement commandable est configuré pour déplacer l'organe de liaison vers l'extérieur de la cavité annulaire afin de former une portion convexe dans l'entrée d'air dans la deuxième position. De préférence, la portion convexe forme une portion d'épaisseur réduite au niveau de la lèvre d'entrée d'air ou encore une bosse s'étendant en saillie radialement vers l'intérieur ou radialement vers l'extérieur.

L'invention concerne également une entrée d'air d'une nacelle de turboréacteur d'aéronef, qui n'est pas couverte par les revendications, s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, l'entrée d'air s'étendant de manière circonférentielle autour de l'axe X et comprenant une paroi intérieure tournée vers l'axe X et configurée pour guider le flux d'air intérieur et le flux d'air inverse et une paroi extérieure, opposée à la paroi intérieure et configurée pour guider un flux d'air extérieur, la paroi intérieure et la paroi extérieure étant reliées entre elles par une lèvre d'entrée d'air de manière à former une cavité annulaire.

L'invention est remarquable en ce que, la lèvre d'entrée d'air comportant au moins une portion élastiquement déformable, l'entrée d'air comporte au moins un organe de liaison, monté dans la cavité annulaire solidairement à la portion élastiquement déformable et au moins un organe de déplacement commandable configuré pour déplacer l'organe de liaison entre :
- une première position, dans laquelle la portion élastiquement déformable de la lèvre d'entrée d'air possède un profil aérodynamique de manière à guider le flux d'air intérieur sur la paroi intérieure pour favoriser une phase de poussée, et
- une deuxième position, dans laquelle la portion élastiquement déformable de la lèvre d'entrée d'air possède un profil irrégulier afin de permettre un décollement du flux d'air inverse de la portion élastiquement déformable pour favoriser une phase d'inversion de poussée.

L'invention concerne également un turboréacteur d'aéronef, qui n'est pas couvert par les revendications, s'étendant selon un axe X orienté de l'amont vers l'aval dans lequel circule un flux d'air intérieur de l'amont vers l'aval lors d'une phase de poussée et un flux d'air inverse de l'aval vers l'amont lors d'une phase d'inversion de poussée, ledit turboréacteur comportant une soufflante configurée pour réaliser une inversion de poussée et une nacelle comportant une entrée d'air, telle que présentée précédemment, de manière à favoriser ladite inversion de poussée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en coupe longitudinale d'une nacelle de turboréacteur lors d'une phase de poussée, selon l'art antérieur,
La figure 2 est une représentation schématique en coupe longitudinale d'une nacelle de turboréacteur lors d'une phase d'inversion de poussée, selon l'art antérieur,
La figure 3 est une représentation schématique en coupe longitudinale d'une nacelle de turboréacteur lors d'une phase de poussée, selon l'invention,
La figure 4 est une représentation schématique en coupe longitudinale d'une nacelle de turboréacteur lors d'une phase d'inversion de poussée, selon l'invention,
La figure 5 est une représentation schématique en coupe transversale d'une entrée d'air comprenant une rangée de portions élastiquement déformables sur la lèvre d'entrée d'air,
La figure 6 est une représentation schématique en coupe transversale d'une entrée d'air comprenant une unique portion élastiquement déformable circonférentielle sur la lèvre d'entrée d'air,
La figure 7A et
La figure 7B sont des représentations schématiques en coupe longitudinale d'une entrée d'air comprenant une portion élastiquement déformable selon une première position aérodynamique et une deuxième position dans laquelle la lèvre d'entrée d'air est amincie,
La figure 7C est une représentation schématique en coupe longitudinale d'une entrée d'air comprenant une portion élastiquement déformable comportant une enveloppe rigide selon une deuxième position dans laquelle la lèvre d'entrée d'air est amincie,
La figure 8A et
La figure 8B sont des représentations schématiques en coupe longitudinale d'une entrée d'air comprenant une portion élastiquement déformable selon une première position aérodynamique et une deuxième position dans laquelle la lèvre d'entrée d'air comporte une concavité tournée vers l'amont,
La figure 9A et
La figure 9B sont des représentations schématiques en coupe longitudinale d'une entrée d'air comprenant une portion élastiquement déformable selon une première position aérodynamique et une deuxième position dans laquelle la lèvre d'entrée d'air comporte une concavité tournée radialement vers l'intérieur,
La figure 10A,
La figure 10B et
La figure 10C sont des représentations schématiques de déformations de l'entrée d'air pour une déviation hétérogène à la circonférence de l'entrée d'air.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

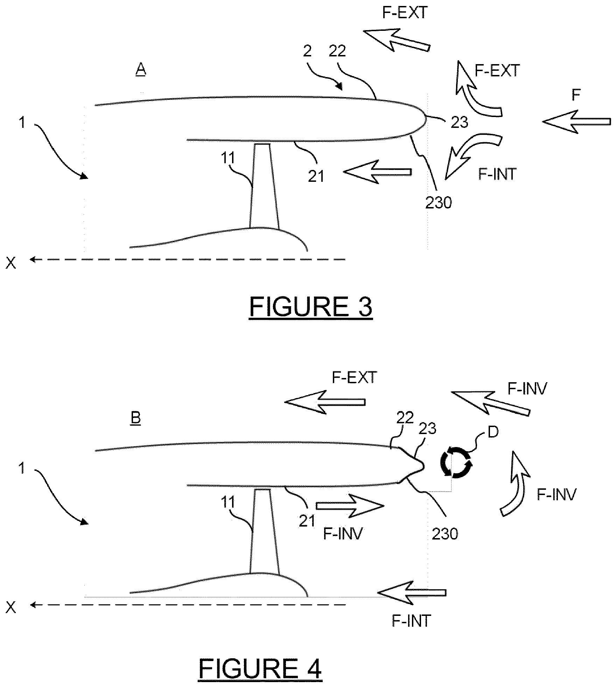

En référence aux figures 3 et 4, il est représenté un turboréacteur 1 selon l'invention s'étendant selon un axe X orienté de l'amont vers l'aval et comprenant une soufflante 11 montée rotative autour de l'axe X dans une virole extérieure 12 définissant une veine d'air. De manière connue, la soufflante 11 est configurée, lors d'une phase de poussée, pour accélérer un flux d'air circulant de l'amont vers l'aval dans le turboréacteur 1, dit flux d'air intérieur F-INT (Figure 3), et lors d'une phase d'inversion de poussée, pour accélérer un flux d'air circulant de l'aval vers l'amont dans le turboréacteur 1, dit flux d'air inverse F-INV (Figure 4). En pratique, le flux d'air inverse F-INV circule d'aval en amont dans une portion radialement extérieure de la veine d'air, en particulier, sur 1/3 du rayon de la veine d'air. Un flux d'air intérieur F-INT circule toujours d'amont en aval dans une portion radialement intérieure de la veine d'air, en particulier, sur 2/3 du rayon de la veine d'air. Le flux d'air intérieur F-INT assure un débit suffisant pour éviter tout phénomène de pompage du turboréacteur.

Comme illustré sur la figure 3, le turboréacteur 1 comprend une nacelle qui comprend à son extrémité amont une entrée d'air 2 s'étendant de manière circonférentielle autour de l'axe X et comprenant une paroi intérieure 21, tournée vers l'axe X et configurée pour guider le flux d'air intérieur F-INT et le flux d'air inverse F-INV, et une paroi extérieure 22, opposée à la paroi intérieure 21 et configurée pour guider un flux d'air extérieur F-EXT. Les parois 21, 22 sont reliées par une lèvre d'entrée d'air 23 comportant un bord d'attaque. Les parois 21, 22 et la lèvre d'entrée d'air 23 forment une cavité annulaire 20 dans laquelle peuvent être notamment montés un dispositif d'atténuation acoustique ou un dispositif de dégivrage.

Dans cet exemple, le turboréacteur 1 comporte des moyens d'inversion de poussée, en particulier, une soufflante 11 à pas variable, connue sous son abréviation anglaise « Variable Pitch Fan » ou VPF de manière à permettre d'inverser le flux d'air circulant dans le turboréacteur 1 et ainsi de créer une poussée inverse permettant la décélération de l'aéronef lors de l'atterrissage ou lors de la réalisation d'autres manoeuvres.

Selon l'invention, en référence aux figures 3 et 4, la lèvre d'entrée d'air 23 comporte au moins une portion élastiquement déformable 230 qui, lors d'une phase de poussée, possède un profil aérodynamique de manière à guider le flux d'air intérieur F-INT sur la paroi intérieure 21 pour favoriser la poussée (première position A), lors d'une phase d'inversion de poussée, possède un profil irrégulier afin de permettre un décollement du flux d'air inverse de la portion élastiquement déformable pour favoriser la poussée inverse (deuxième position B).

La portion élastiquement déformable 230 peut être réalisée en un matériau déformable, par exemple, un matériau polymère ou organique. De manière préférée, la portion élastiquement déformable 230 est associée à des écailles, de préférence se chevauchant, afin de rendre la membrane plus rigide.

Selon un aspect de l'invention, la portion élastiquement déformable 230 peut comporter une ou plusieurs parties élémentaires rigides reliées par une ou plusieurs parties élémentaires flexibles de manière à former un ensemble déformable.

Ainsi, la lèvre d'entrée d'air 23 se déforme de manière avantageuse afin de remplir deux rôles différents et opposées lors d'une phase de poussée et lors d'une phase de poussée inverse. Dans la première position A, la portion élastiquement déformable 230 n'affecte pas les performances aérodynamiques de la lèvre d'entrée d'air 23. La phase de poussée est ainsi optimale.

Suite à son déplacement, dans la deuxième position B, la lèvre d'entrée d'air 23 est modifiée et ne possède plus un profil aérodynamique, ce qui permet de réaliser un décollement D du flux d'air inverse F-INV. Autrement dit, l'ensemble du flux d'air inverse F-INV est guidé de manière à circuler suivant une direction sensiblement axiale par rapport à l'axe X afin de s'opposer à un flux d'air amont F, à l'origine de l'inversion de poussée. Cela permet de réduire la dépression locale P présentée dans l'art antérieur qui vient réduire les performances de la phase d'inversion de poussée. Une lèvre d'entrée d'air 23 ayant un profil irrégulier permet de favoriser un décollement D contrairement à une lèvre d'entrée d'air 23 ayant un profil aérodynamique.

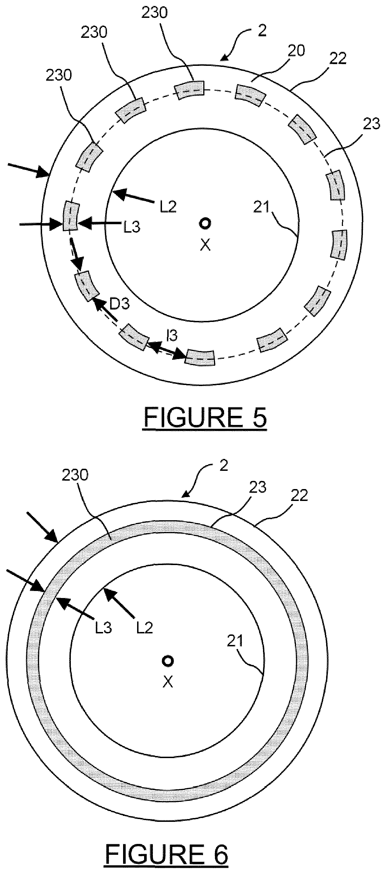

En référence à la figure 5, il est représenté une lèvre d'entrée d'air 23 comprenant plusieurs portions élastiquement déformables 230 qui sont réparties à la circonférence de l'entrée d'air 2 autour de l'axe X de manière à permettre d'améliorer la phase d'inversion de poussée de manière homogène à la circonférence de l'entrée d'air 2. De manière préférée, en référence à la figure 5, la longueur azimutale D3 d'une portion élastiquement déformable 230 est comprise entre 10° et 25°. De manière préférée, l'écartement azimutal I3 entre deux portions élastiquement déformables 230 consécutives est compris entre 0° et 5. De manière préférée, le nombre de portions élastiquement déformables 230 est suffisamment grand pour permettre un décollement D sur l'ensemble de la circonférence de l'entrée d'air 2 et suffisamment faible pour réduire le poids et la traînée.

De manière préférée, les portions élastiquement déformables 230 sont organisées en rangées, chaque rangée comportant une pluralité de portions élastiquement déformables 230 positionnées à une même distance radiale par rapport à l'axe X. A titre d'exemple, il est représenté une unique rangée sur la figure 5 mais il va de soi que le nombre de rangées pourrait être plus élevé. L'utilisation de plusieurs rangées, en particulier disposées en quinconce les unes par rapport aux autres, permet de réaliser une déviation sensiblement continue selon la circonférence de l'entrée d'air 2 tout en utilisant des portions élastiquement déformables 230 écartées les unes des autres qui sont plus simples à maintenir.

De manière préférée, en référence à la figure 5, dans la première position A, le rapport L3/L2, dans lequel le paramètre L3 est l'épaisseur radiale d'une portion élastiquement déformable 230 et le paramètre L2 est l'épaisseur radiale de l'entrée d'air 2, est compris entre 0.1 et 0.5.

De manière alternative, en référence à la figure 6, l'entrée d'air 2 comprend une unique portion élastiquement déformable 230 s'étendant de manière circonférentielle autour de l'axe X. Une telle portion élastiquement déformable 230 permet d'assurer une déviation lors de la phase d'inversion de poussée à la circonférence de l'entrée d'air 2, la déviation pouvant être homogène (déviation uniforme) ou hétérogène (degré de déviation différent à la circonférence).

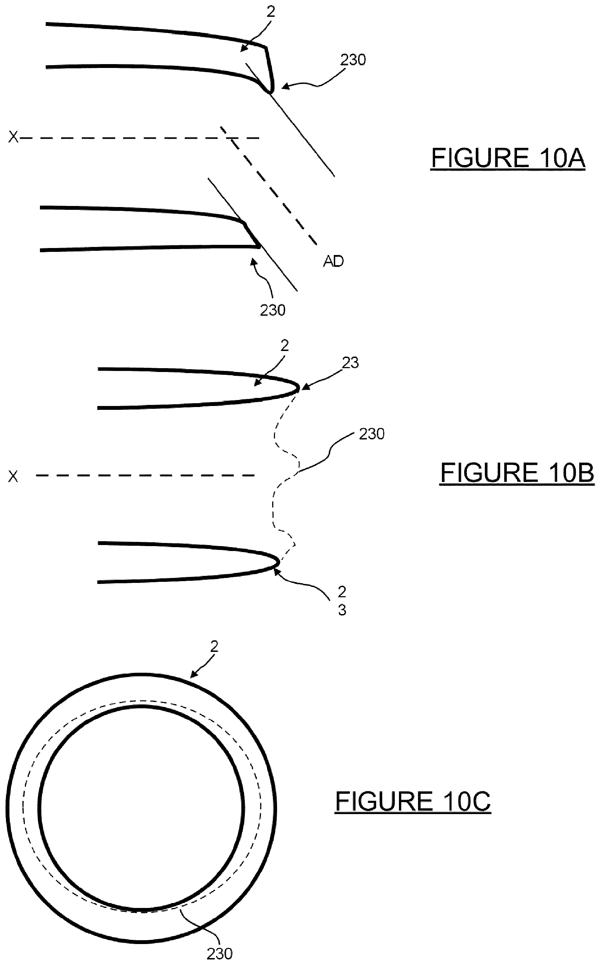

A titre d'exemple de déviation hétérogène, les portions élastiquement déformables 230 peuvent être orientées selon des directions différentes à la circonférence de l'entrée d'air 2 de manière à former une lèvre déformée 23 orientée selon un axe de déformation AD prédéterminé comme illustré à la figure 10A. De manière alternative, les portions élastiquement déformables 230 peuvent s'étendre selon des longueurs en saillie différentes à la circonférence de l'entrée d'air 2 comme illustré à la figure 10B. Par ailleurs, les portions élastiquement déformables 230 peuvent former ensemble une ceinture périphérique de forme elliptique, en particulier ovoïde, dans un plan transversal à l'axe X comme illustré à la figure 10C. Une déviation hétérogène permet de guider le flux d'air inverse en tenant compte de l'environnement de la nacelle.

L'invention sera mieux comprise lors de la description des différentes formes de réalisation. Les différents aspects de l'invention sont décrits par la suite selon plusieurs formes de réalisation, présentées successivement et uniquement à titre d'exemple. Il va de soi que l'invention ne se limite pas à ces formes de réalisation.

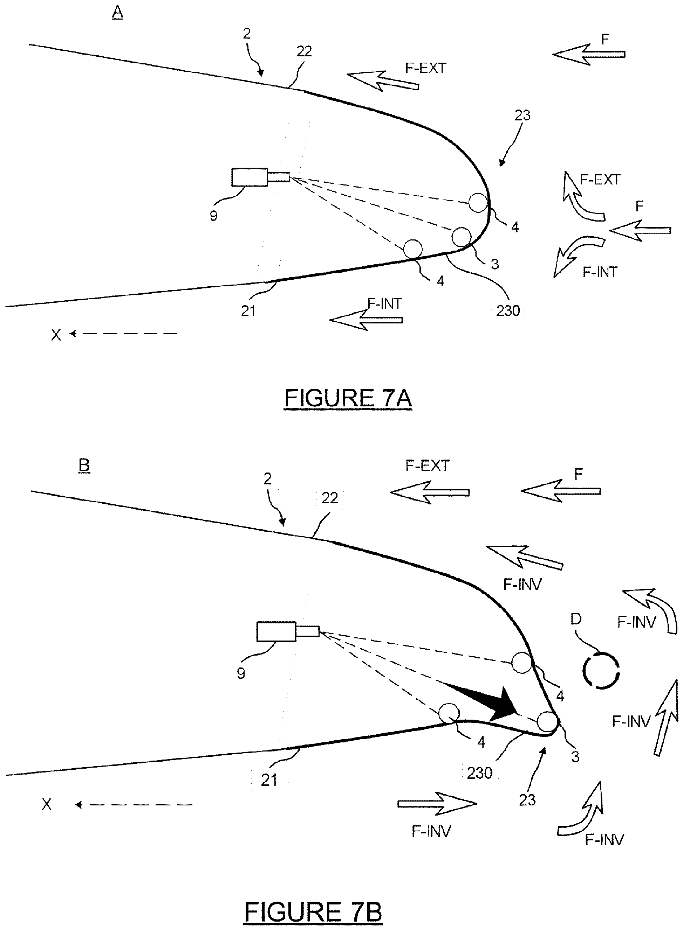

Selon une première forme de réalisation illustrée sur les figures 7A et 7B, il est représenté une entrée d'air 2 comportant une lèvre d'entrée d'air 23 comportant une portion élastiquement déformable 230. Dans cet exemple, l'entrée d'air 3 comporte trois organes 3, 4 solidaires de la portion élastiquement déformable 230 : deux organes fixes 4 et un organe mobile 3. L'organe de liaison mobile 3 permet de déformer la portion élastiquement déformable 230 de manière précise entre les organes fixes 4.

Dans cette première forme de réalisation, la lèvre d'entrée d'air 23 comporte un premier organe de liaison fixe 4 positionné à l'extrémité amont de la lèvre d'entrée d'air 23 et un deuxième organe de liaison fixe 4 positionné au niveau de la paroi intérieure 21 comme illustré à la figure 7A. L'organe de liaison mobile 3 est positionné entre les deux organes de liaison fixes 4 comme illustré à la figure 7A. De manière préférée, l'organe de liaison mobile 3 est positionné sensiblement au centre de la portion élastiquement déformable 230. Dans cet exemple, la portion élastiquement déformable 230 comportant une longueur définie dans un plan en coupe longitudinale, l'organe de liaison mobile 3 est écarté du centre de la portion élastiquement déformable 230 d'une distance inférieure à 10% de la longueur totale de la portion élastiquement déformable 230.

Dans cet exemple, l'entrée d'air 2 comporte un organe de déplacement commandable 9 afin de déplacer en translation l'organe de liaison mobile 3 de la première position A à la deuxième position B. A titre d'exemple, cet organe de déplacement commandable 9 se présente sous la forme d'un actionneur pneumatique, hydraulique, électrique ou autre afin de permettre un déplacement suite à la réception d'une instruction de commande d'un calculateur. Un actionneur pneumatique est privilégié étant donné qu'il est plus simple à intégrer. De manière préférée, l'organe de déplacement commandable 9 permet également de déplacer en translation la portion élastiquement déformable 3 de la deuxième position B à la première position A. L'entrée d'air 2 peut comporter un ou plusieurs organes de déplacement commandable 9.

Toujours en référence aux figures 7A et 7B, l'organe de déplacement commandable 9 permet de déplacer l'organe de liaison mobile 3 vers l'amont de manière à ce que la portion élastiquement déformable 230 s'étende en saillie et réduise le diamètre de circulation du flux d'air inverse F-INV. Dans la deuxième position B, comme illustré à la figure 7B, la lèvre d'entrée d'air 23 est plus fine et entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet de réduire la formation d'une dépression locale comme dans l'art antérieur. Autrement dit, les performances lors de la phase d'inversion de poussée sont accrues.

Sur les figures 7A-7B, les organes fixes 4 sont reliés à l'organe de déplacement commandable 9 et permettent de déplacer l'organe de liaison mobile 3. L'organe de déplacement commandable 9 permet de maintenir les organes fixes 4 immobiles lors du déplacement de l'organe de liaison mobile 3, ce qui permet de contrôler la déformation de la portion élastiquement déformable 3. Il va de soi que les organes fixes 4 pourraient n'être reliés à aucun organe de déplacement commandable 9 ou reliés à des organes de déplacement commandables 9 différents.

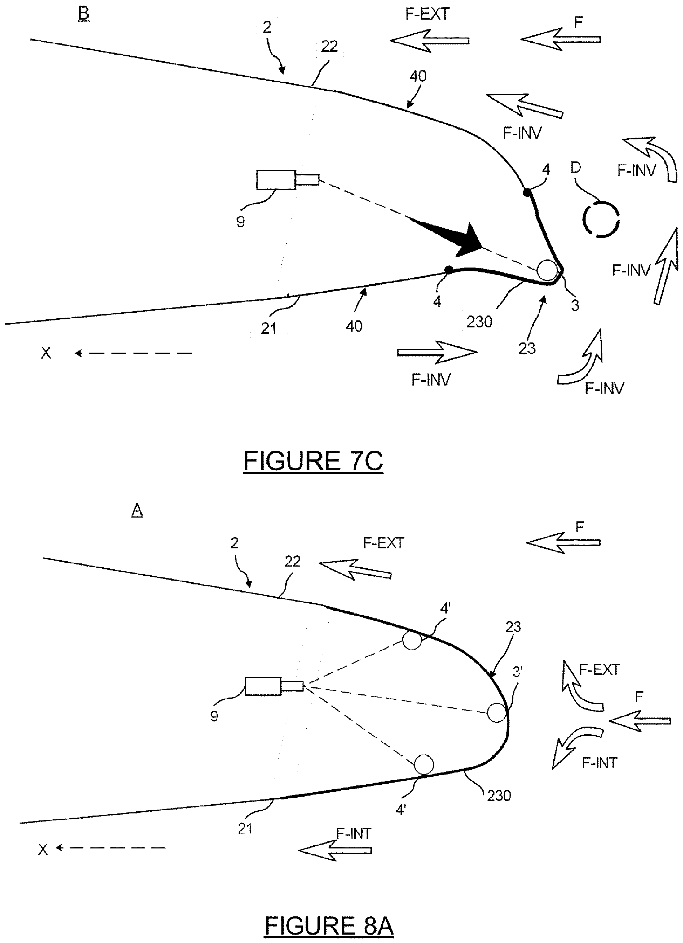

En référence à la figure 7C, les organes fixes 4 se présentent sous la forme d'une enveloppe fixe 40. Autrement dit, les organes fixes 4 forment l'interface entre l'enveloppe fixe 40 et la portion élastiquement déformable 230.

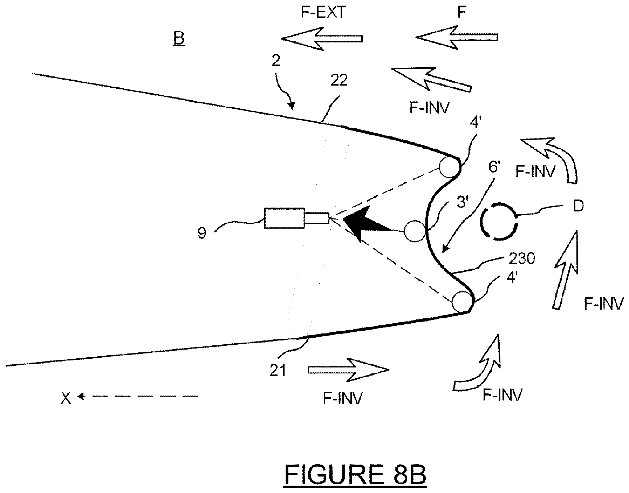

Selon une deuxième forme de réalisation illustrée sur les figures 8A et 8B, la lèvre d'entrée d'air 23 comporte un premier organe de liaison fixe 4' positionné au niveau de la paroi extérieur 22 et un deuxième organe de liaison fixe 4' positionné au niveau de la paroi intérieure 21 comme illustré à la figure 8A. L'organe de liaison mobile 3' est positionné à l'extrémité amont de la lèvre d'entrée d'air 23 entre les deux organes de liaison fixes 4' comme illustré à la figure 8A.

De manière analogue à précédemment, l'entrée d'air 2 comporte un organe de déplacement commandable 9 afin de déplacer en translation l'organe de liaison mobile 3' de la première position A à la deuxième position B.

Toujours en référence aux figures 8A et 8B, l'organe de déplacement commandable 9 permet de déplacer l'organe de liaison mobile 3' vers l'aval de manière à ce que la portion élastiquement déformable 230 s'étende en retrait de manière à former une portion concave 6' dans la lèvre d'entrée d'air 23 dans la deuxième position B. Dans cette forme de réalisation, la concavité est tournée vers l'amont de manière à former une lèvre d'entrée d'air 23 irrégulière.

Dans la deuxième position B, comme illustré à la figure 8B, la lèvre d'entrée d'air 23 est déformée et entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet réduire la formation d'une dépression locale comme dans l'art antérieur. Autrement dit, les performances lors de la phase d'inversion de poussée sont accrues.

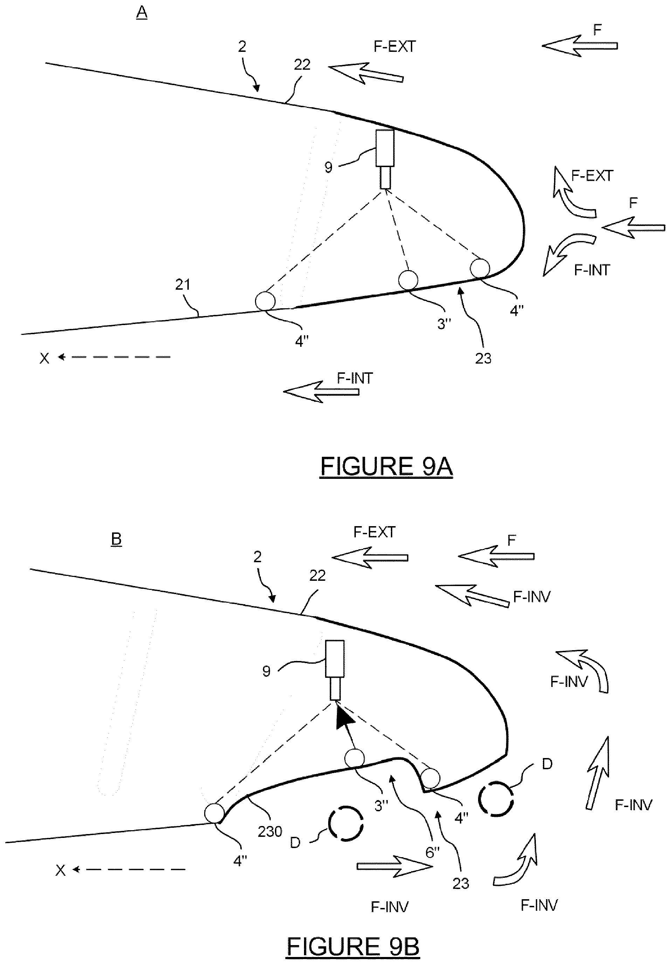

Selon une troisième forme de réalisation illustrée sur les figures 9A et 9B, la lèvre d'entrée d'air 23 comporte deux organes de liaison fixe 4" positionnés au niveau d'une partie inférieure de la lèvre d'entrée d'air 23 comme illustré à la figure 8A. L'organe de liaison mobile 3" est positionné entre les deux organes de liaison fixes 4" comme illustré à la figure 9A.

De manière analogue à précédemment, l'entrée d'air 2 comporte un organe de déplacement commandable 9 afin de déplacer en translation l'organe de liaison mobile 3" de la première position A à la deuxième position B.

Toujours en référence aux figures 9A et 9B, l'organe de déplacement commandable 9 permet de déplacer l'organe de liaison mobile 3 radialement vers l'extérieur de manière à ce que la portion élastiquement déformable 230 s'étende en retrait de manière à former une portion concave 6" dans la partie inférieure de la lèvre d'entrée d'air 23 dans la deuxième position B. Dans cette forme de réalisation, la concavité est tournée radialement vers l'intérieur de manière à former une lèvre d'entrée d'air 23 comportant une partie intérieure irrégulière.

Dans la deuxième position B, comme illustré à la figure 9B, la lèvre d'entrée d'air 23 est déformée et entraine un décollement D du flux d'air inverse F-INV lors de sa circulation de la paroi intérieure 21 à la paroi extérieure 22. Du fait de son décollement D, le flux d'air inverse F-INV n'épouse pas la forme de la lèvre d'entrée d'air 23 et est écarté de ce dernier, ce qui permet d'éviter toute formation d'une dépression locale comme dans l'art antérieur. Autrement dit, les performances de la phase d'inversion de poussée sont accrues.

De même, selon une forme de réalisation non représentée, la lèvre d'entrée d'air 23 peut comporter deux organes de liaison fixe positionnés au niveau de la partie supérieure de la lèvre d'entrée d'air 23. L'organe de liaison mobile est positionné entre les deux organes de liaison fixes. L'organe de déplacement commandable permet de déplacer l'organe de liaison mobile radialement vers l'intérieur de manière à ce que la portion élastiquement déformable s'étende en retrait de manière à former une portion concave dans la partie supérieure de la lèvre d'entrée d'air 23 dans la deuxième position B. Dans cette forme de réalisation, la concavité est tournée radialement vers l'extérieur de manière à former une lèvre d'entrée d'air 23 comportant une partie extérieure irrégulière.

Selon un autre aspect non représenté, qui n'est pas couvert par les revendications, l'organe de déplacement commandable se présente sous la forme d'un dispositif d'actionnement gonflable configuré pour gonfler/dégonfler la portion élastiquement déformable pour passer d'une position à une autre. De manière préférée, le dispositif d'actionnement gonflable est alimenté par de l'air prélevé dans le turboréacteur.

On décrit par la suite un procédé d'utilisation de l'entrée d'air 2 selon l'invention précédemment présentée. Par souci de clarté, il est présenté le déplacement d'une unique portion élastiquement déformable 230 mais il va de soi qu'une pluralité de portions élastiquement déformables 230 peuvent être déplacées de manière concomitante ou séquentielle.

Lors d'une phase de poussée, la soufflante 11 permet d'accélérer un flux d'air intérieur F-INT qui est guidé par l'entrée d'air 2 ayant un profil aérodynamique favorisant la poussée. La portion élastiquement déformable 230 est dans la première position A lors d'une phase de poussée du turboréacteur 1, afin que l'entrée d'air 2 possède un profil aérodynamique de manière à guider le flux d'air.

Lors d'une inversion de poussée dudit turboréacteur 1, en particulier suite à une modification du pas des aubes de soufflante 11, l'organe de déplacement commandable 9 déplace l'organe de liaison 3 dans une deuxième position B, dans laquelle la portion élastiquement déformable 230 de la lèvre d'entrée d'air 23 possède un profil irrégulier afin de permettre un décollement D du flux d'air inverse F-INV de la portion élastiquement déformable 230.

De manière avantageuse, cette étape de déplacement procure à l'aéronef de bonnes performances à la fois lors d'une phase de poussée, où le flux d'air intérieur F-INT est conservé inchangé, et lors d'une phase d'inversion de poussée, où la portion élastiquement déformable 230 génère un décollement D du flux d'air inverse F-INV de la paroi intérieure 21.

Selon un aspect de l'invention, seule une partie des portions élastiquement déformables 230 est déplacée au cours de l'étape de déplacement pour s'adapter à différentes conditions de fonctionnement, en particulier, lors du freinage. De plus, le degré de déformation peut varier à la circonférence de la lèvre d'entrée d'air afin de contrôler de manière précise la phase d'inversion de poussée.

Grâce à l'invention, les performances du turboréacteur 1 sont significativement améliorées lors de la phase d'inversion de poussée tout en maintenant les performances existantes lors de la phase de poussée. En effet, la portion élastiquement déformable 230 génère, dans la deuxième position B, un décollement D du flux d'air inverse F-INV de la paroi intérieure 21 permettant d'orienter l'ensemble du flux d'air inverse F-INV dans une direction sensiblement axiale de sens opposé au flux d'air amont F, à l'origine de l'inversion de poussée, tout en générant un poids et une traînée réduits. Dans la première position A, l'entrée d'air 2 conserve avantageusement son profil aérodynamique.

## Revendications

1. Procédé d'utilisation d'une entrée d'air (2) d'une nacelle de turboréacteur (1) d'aéronef s'étendant selon un axe X orienté de l'amont vers l'aval dans lequel circule un flux d'air intérieur (F-INT) de l'amont vers l'aval lors d'une phase de poussée et un flux d'air inverse (F-INV) de l'aval vers l'amont lors d'une phase d'inversion de poussée, l'entrée d'air (2) s'étendant de manière circonférentielle autour de l'axe X et comprenant une paroi intérieure (21) tournée vers l'axe X et configurée pour guider le flux d'air intérieur (F-INT) et le flux d'air inverse (F-INV) et une paroi extérieure (22), opposée à la paroi intérieure (21) et configurée pour guider un flux d'air extérieur (F-EXT), la paroi intérieure (21) et la paroi extérieure (22) étant reliées entre elles par une lèvre d'entrée d'air (23) de manière à former une cavité annulaire (20), la lèvre d'entrée d'air (23) comportant au moins une portion élastiquement déformable (230), l'entrée d'air (2) comportant au moins un organe de liaison (3, 3', 3"), monté dans la cavité annulaire (20) solidairement à la portion élastiquement déformable (230) et au moins un organe de déplacement commandable (9) relié mécaniquement à l'organe de liaison (3, 3', 3") et configuré pour déplacer ledit organe de liaison (3, 3', 3"), procédé dans lequel :
- lors d'une phase de poussée du turboréacteur (1), l'organe de déplacement commandable (9) déplace l'organe de liaison (3, 3', 3") dans une première position (A), dans laquelle la portion élastiquement déformable (230) de la lèvre d'entrée d'air (23) comprend un profil aérodynamique de manière à guider le flux d'air intérieur (F-INT) sur la paroi intérieure (21) pour favoriser une phase de poussée, et
- lors d'une phase d'inversion de poussée du turboréacteur (1), l'organe de déplacement commandable (9) déplace l'organe de liaison (3, 3', 3") dans une deuxième position (B), dans laquelle la portion élastiquement déformable (230) de la lèvre d'entrée d'air (23) comprend un profil irrégulier afin de permettre un décollement (D) du flux d'air inverse (F-INV) de la portion élastiquement déformable (230).

2. Procédé, selon la revendication 1, dans lequel la lèvre d'entrée d'air (23) comprend une pluralité de portions élastiquement déformables (230) réparties à la circonférence de l'entrée d'air (2) autour de l'axe X.

3. Procédé, selon la revendication 1, dans lequel la lèvre d'entrée d'air (23) comprend une unique portion élastiquement déformable (230) s'étendant de manière circonférentielle autour de l'axe X.

4. Procédé, selon l'une des revendications 1 à 3, dans lequel l'organe de liaison (3, 3") est positionné en aval de l'extrémité amont de la lèvre d'entrée d'air (23).

5. Procédé, selon l'une des revendications 1 à 4, dans lequel l'organe de liaison (3") est radialement intérieur à l'extrémité amont de la lèvre d'entrée d'air (23).

6. Procédé, selon l'une des revendications 1 à 5, dans lequel la lèvre d'entrée d'air (23) comportant une enveloppe fixe (40), la portion élastiquement déformable (230) est reliée à l'enveloppe fixe.

7. Procédé, selon l'une des revendications 1 à 6, dans lequel l'organe de liaison (3, 3", 3") est solidarisé sensiblement au centre de la portion élastiquement déformable (230).

8. Procédé, selon l'une des revendications 1 à 7, dans lequel l'organe de déplacement commandable (9) est configuré pour déplacer l'organe de liaison (3', 3") vers l'intérieur de la cavité annulaire (20) afin de former une portion concave dans la lèvre d'entrée d'air (23) dans la deuxième position (B).

9. Procédé, selon l'une des revendications 1 à 7, dans lequel l'organe de déplacement commandable (9) est configuré pour déplacer l'organe de liaison vers l'extérieur (3) de la cavité annulaire (20) afin de former une portion convexe dans l'entrée d'air (23) dans la deuxième position (B).

## Patentansprüche

1. Verfahren zur Verwendung eines Lufteinlasses (2) einer Turbotriebwerksgondel (1) eines Flugzeugs, der sich gemäß einer Achse X erstreckt, die von stromaufwärts nach stromabwärts ausgerichtet ist, in dem ein innerer Luftstrom (F-INT) bei einer Schubphase von stromaufwärts nach stromabwärts und bei einer Schubumkehrphase (F-INV) von stromabwärts nach stromaufwärts zirkuliert, wobei sich der Lufteinlass (2) umfangmäßig um die Achse X erstreckt und eine Innenwand (21) umfasst, die zur Achse X gerichtet und dazu ausgelegt ist, den inneren Luftstrom (F-INT) und den umgekehrten Luftstrom (F-INV) zu führen, und eine Außenwand (22), die der Innenwand (21) gegenüberliegt und dazu ausgelegt ist, einen äußeren Luftstrom (F-EXT) zu führen, wobei die Innenwand (21) und die Außenwand (22) durch eine Lufteinlasslippe (23) derart miteinander verbunden sind, dass ein ringförmiger Hohlraum (20) ausgebildet wird, wobei die Lufteinlasslippe (23) mindestens einen elastisch verformbaren Abschnitt (230) aufweist, wobei der Lufteinlass (2) mindestens ein Verbindungsorgan (3, 3', 3") aufweist, das im ringförmigen Hohlraum (20) mit dem elastisch verformbaren Abschnitt (230) fest verbunden angebracht ist und mindestens ein steuerbares Verlagerungsorgan (9), das mit dem Verbindungsorgan (3, 3', 3") mechanisch verbunden und dazu ausgelegt ist, das Verbindungsorgan (3, 3', 3") zu verlagern, wobei das Verfahren:
- bei einer Schubphase des Turbotriebwerks (1) das steuerbare Verlagerungsorgan (9) das Verbindungsorgan (3, 3', 3") in eine erste Position (A) verlagert, in welcher der elastisch verformbare Abschnitt (230) der Lufteinlasslippe (23) ein aerodynamisches Profil umfasst, so dass der innere Luftstrom (F-INT) über die Innenwand (21) geführt wird, um eine Schubphase zu fördern, und
- bei einer Schubumkehrphase des Turbotriebwerks (1) das steuerbare Verlagerungsorgan (9) das Verbindungsorgan (3, 3', 3") in eine zweite Position (B) verlagert, in welcher der elastisch verformbare Abschnitt (230) der Lufteinlasslippe (23) ein unregelmäßiges Profil umfasst, um ein Lösen (D) des umgekehrten Luftstroms (F-INV) von dem elastisch verformbaren Abschnitt (230) zu gestatten.

2. Verfahren nach Anspruch 1, wobei die Lufteinlasslippe (23) eine Vielzahl elastisch verformbarer Abschnitte (230) umfasst, die auf dem Umfang des Lufteinlasses (2) um die Achse X verteilt sind.

3. Verfahren nach Anspruch 1, wobei die Lufteinlasslippe (23) einen einzigen elastisch verformbaren Abschnitt (230) umfasst, der sich umfangmäßig um die Achse X erstreckt.

4. Verfahren nach einem der Ansprüche 1 bis 3, wobei das Verbindungsorgan (3, 3") dem stromaufwärtigen Ende der Lufteinlasslippe (23) nachgelagert positioniert ist.

5. Verfahren nach einem der Ansprüche 1 bis 4, wobei das Verbindungsorgan (3") am stromaufwärtigen Ende der Lufteinlasslippe (23) radial innen liegt.

6. Verfahren nach einem der Ansprüche 1 bis 5, wobei die Lufteinlasslippe (23) eine feste Hülle (40) aufweist, wobei der elastisch verformbare Abschnitt (230) mit der festen Hülle verbunden ist.

7. Verfahren nach einem der Ansprüche 1 bis 6, wobei das Verbindungsorgan (3, 3", 3") etwa im Zentrum des elastisch verformbaren Abschnitts (230) fest verbunden ist.

8. Verfahren nach einem der Ansprüche 1 bis 7, wobei das steuerbare Verlagerungsorgan (9) dazu ausgelegt ist, das Verbindungsorgan (3', 3") in das Innere des ringförmigen Hohlraums (20) zu verlagern, um einen konkaven Abschnitt in der Lufteinlasslippe (23) in der zweiten Position (B) zu bilden.

9. Verfahren nach einem der Ansprüche 1 bis 7, wobei das steuerbare Verlagerungsorgan (9) dazu ausgelegt ist, das Verbindungsorgan nach außerhalb (3) des ringförmigen Hohlraums (20) zu verlagern, um einen konvexen Abschnitt im Lufteinlass (23) in der zweiten Position (B) zu bilden.

## Claims

1. Method for using an air intake (2) of an aircraft turbojet engine nacelle (1) extending along an X axis oriented from upstream to downstream wherein an internal air flow (F-INT) circulates from upstream to downstream during a thrust phase and a reverse air flow (F-INV) from downstream to upstream during a thrust reversal phase, the air intake (2) extending circumferentially around the X axis and comprising an internal wall (21) turned towards the X axis and configured to guide the internal air flow (F-INT) and the reverse air flow (F-INV) and an external wall (22), opposite the internal wall (21) and configured to guide an external air flow (F-EXT), the internal wall (21) and the external wall (22) being interconnected by an air intake lip (23) in order to form an annular cavity (20), the air intake lip (23) comprising at least one elastically deformable portion (230), the air intake (2) comprising at least one connecting member (3, 3', 3"), mounted in the annular cavity (20) integral with the elastically deformable portion (230) and at least one controllable displacement member (9) mechanically connected to the connecting member (3, 3', 3") and configured to move said connecting member (3, 3', 3"), method wherein:
- during a thrust phase of the turbojet engine (1), the controllable displacement member (9) moves the connecting member (3, 3', 3") into a first position (A), wherein the elastically deformable portion (230) of the air intake lip (23) comprises an aerodynamic profile so as to guide the internal air flow (F-INT) on the internal wall (21) to promote a thrust phase, and
- during a reverse thrust phase of the turbojet engine (1), the controllable displacement member (9) moves the connecting member (3, 3', 3") into a second position (B), in which the elastically deformable portion (230) of the air intake lip (23) comprises an irregular profile so as to allow a release (D) of the reverse air flow (F-INV) from the elastically deformable portion (230).

2. Method, according to claim 1, wherein the air intake lip (23) comprises a plurality of elastically deformable portions (230) distributed at the circumference of the air intake (2) around the X axis.

3. Method, according to claim 1, wherein the air intake lip (23) comprises a single elastically deformable portion (230) extending circumferentially around the X axis.

4. Method, according to one of claims 1 to 3, wherein the connecting member (3, 3") is positioned downstream of the upstream end of the air intake lip (23).

5. Method, according to one of claims 1 to 4, wherein the connecting member (3") is radially internal at the upstream end of the air intake lip (23).

6. Method, according to one of claims 1 to 5, wherein the air intake lip (23) comprising a fixed envelope (40), the elastically deformable portion (230) is connected to the fixed envelope.

7. Method, according to one of claims 1 to 6, wherein the connecting member (3, 3", 3") is substantially attached to the centre of the elastically deformable portion (230).

8. Method, according to one of claims 1 to 7, wherein the controllable displacement member (9) is configured to move the connecting member (3', 3") towards the inside of the annular cavity (20) so as to form a concave portion in the air intake lip (23) in the second position (B).

9. Method, according to any one of claims 1 to 7, wherein the controllable displacement member (9) is configured to move the connecting member (3) towards the outside of the annular cavity (20) so as to form a convex portion in the air intake (23) in the second position (B).
